# EUROPEAN PATENT SPECIFICATION

(11) **EP 0 692 163 B1**
(45) Date of publication and mention of the grant of the patent: **23.04.1997**
(21) Application number: 94910455.8
(22) Date of filing: 23.03.1994
(51) Int. Cl.: H04B 7/17

(54) **RADIO REPEATER**
FUNKZWISCHENVERSTÄRKER
REPETEUR

(30) Priority: 31.03.1993 EP 93302524
(43) Date of publication of application: 17.01.1996
(73) Proprietor: BRITISH TELECOMMUNICATIONS public limited company, London EC1A 7AJ (GB)
(72) Inventor: ARMITAGE, Richard George, Stowmarket, Suffolk IP14 1TD (GB)
(74) Representative: Lidbetter, Timothy Guy Edwin
(86) International application number: GB9400600
(87) International publication number: WO9423504

(56) References cited:
- EP-A- 0 092 237

## Description

This invention relates to radio repeaters and in particular, though not exclusively, to radio repeaters for mobile radio systems including cellular radio telephone systems and cordless telephone systems such as wireless PBX.

Repeaters are used to extend the coverage of a base station to areas having poor or inadequate coverage from the base station e.g. because of the topography of the region. The invention has particular application in situations where it is desired to extend the coverage of a base station to within a building.

Generally a repeater comprises one or more receivers for receiving radio signals, one or more amplification paths for amplifying the received signals, and one or more transmitters for transmitting the amplified signal. The receivers and transmitters include antennas. For example, in a repeater for extending coverage within a building, an external ('up' ) antenna can both receive 'downward' signals from the base station and transmit 'upward' signals to it, and a separate internal ('down' ) antenna within the building will receive 'upward' signals from a mobile unit and transmit 'downward' signals to it.

In such an arrangement a problem can occur if the amplification paths are not adequately isolated from each other. This is because the output of one amplification path can be fed to the input of the return amplification path at the point where both paths are connected to the same antenna, thus setting up a feedback loop. In order to avoid this it is desirable to isolate the amplification paths from each other. Similar problems can also arise even if separate transmit and receive antennas are used, if the receiving antenna picks up transmissions from the transmitting antenna, and the antennas would also need to be isolated from each other.

In a Time Division Duplex system such as the Digital European Cordless Telecommunications standard (DECT) issued by the European Telecommunications Standards Institute (ETSI) (Ref 300175 and 300176) signals are passed alternately from a base station to a mobile unit ('downwards') and vice versa ('upwards') on the same radio frequency, the switching between 'up' and 'down' modes being controlled by synchronisation codes carried in the signals. Thus, in a repeater for such a system, only one of the two amplification paths is in use at any given instant. For the reasons explained above, it would be desirable to isolate the path not in use at any given instant.

In order to achieve this, the switching must be synchronised with the synchronisation codes carried in the signals. These codes must therefore be extracted from the signals, which must be decoded for this purpose.

In a known arrangement, disclosed in European Patent specification No EP0092237 (NEC) a repeater is disclosed in which signals received by the repeater station are stored by the repeater and retransmitted at a time determined in relation to synchronising data in the received signal. In order to extract the synchronising signal the incoming signal is decoded. However, decoding and recoding the signal introduces delay into the signal, which can introduce a dual path effect between the original and repeated signals and can also result in synchronisation problems elsewhere in the system.

This problem is solved, according to the invention, by arranging that the incoming signals are monitored to identify the synchronisation data without decoding the signal going through the amplification path. The monitoring may be performed by a second receiver, which may use one of the antennas of the main amplification paths.

According to a first aspect, the invention comprises a radio repeater for reception amplification and retransmission of radio signals carrying synchronisation data, the repeater having a plurality of amplification paths and having means for repeated changeover switching between amplification paths, characterised in having means for monitoring incoming radio signals, means for extracting synchronisation data from the monitored signals, and means for selecting an amplification path on the basis of the synchronisation data so extracted, so that the incoming radio signals can be amplified by the selected amplification path.

According to a second aspect, the invention comprises a repeater for selectively amplifying different time-slots in a radio signal carrying synchronisation data wherein the repeater comprises: a radio receiver for receiving incoming radio signals; a plurality of amplifying paths for amplifying the radio signals received by the radio receiver; a switching means fcr selectively switching the incoming radio signals to individual amplifying paths from amongst the plurality of amplifying paths; means for monitoring the incoming radio signals; data extraction means for extracting, from the output of the monitoring means, synchronisation data carried by the radio signals; and control means for controlling the switching means in response to the synchronisation data extracted by the data extraction means.

According to a third aspect the invention comprises a method of reception, amplification, and retransmission a plurality of radio signals carrying synchronisation data, characterised in that incoming radio signals are monitored and synchronisation data extracted from the monitored signals, and for each signal an amplification path of a radio repeater arranged for repeated changeover switching between amplification paths, is selected from a plurality of such paths on the basis of the synchronisation data so extracted, so that each incoming radio signal can be amplified by a respective amplification path.

The synchronisation data may be transmit/receive signals, such as those generated in signals according to the DECT standard, and may also control additional switching to isolate switched out circuitry. If the amplification required for each time-slot remains constant, then each application path may have a fixed amplification factor. This would be the case, for example, for any time slot relating to signals received from a fixed transmitter, such as a distribution point or another repeater station. However, in many applications the amplification factors will be constantly changing as mobile units move relative to the repeater. The amplifier circuit of any path to be used by mobile units preferably has an automatic gain control circuit. One purpose of the automatic gain control is to limit the output power of the repeater such that permitted level is not exceeded. For maximum versatility, all paths should preferably incorporate such a circuit. The amplification paths may have parts in common, the switching means being arranged to define different paths by changing connections between them. Each path may have its own dedicated automatic gain control circuit. A smoothing arrangement would be necessary in this case to ensure that the gain is "remembered" across the gap between successive time slots allocated to the same channel. In other circumstances it can be arranged that the same circuit can form part of more than one path. Such a circuit would have to have an AGC response time rapid enough, to respond to each successive signal correctly.

The incoming signal may be converted to another frequency by the repeater. Because Automatic Gain Control is easier to implement at lower frequencies it is preferred to down-convert the signal to a lower frequency for amplification. In such cases, it is advantageous to reconvert the signal to the original frequency for onward transmission.

Two embodiments of the invention will now be described with reference to the drawings, in which
- Figure 1 is a general schematic block diagram of the general arrangement of a repeater according to a first preferred embodiment.
- Figure 2 is a block diagram showing detail of the arrangement of part of the embodiment of fig. 1 including main amplification and pre- and post-amplification stages.
- Figure 3 is a block diagram showing one of the pre- and post-amplification stages of fig. 2 in more detail.
- Figure 4 is a block diagram showing one of the main amplification stages of fig. 2 in more detail.
- Figure 5 is a block diagram showing a part of the embodiment of fig. 1, including detail of the control logic.
- Figure 6 shows a general schematic block diagram of a second embodiment of the invention.

In order to simplify the following explanation In order to simplify the following explanation only one RF channel is used, and there are only two timeslots in each frame; ie. the system is single-channel time-division duplex. It will be apparent to those skilled in the art how to extend the principle to greater numbers of time-slots.

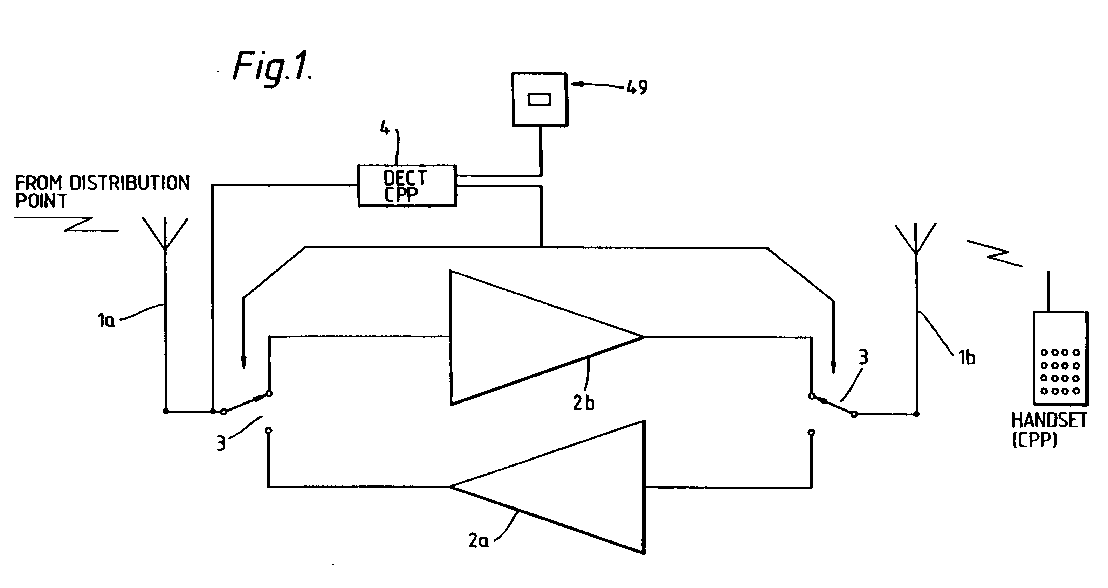

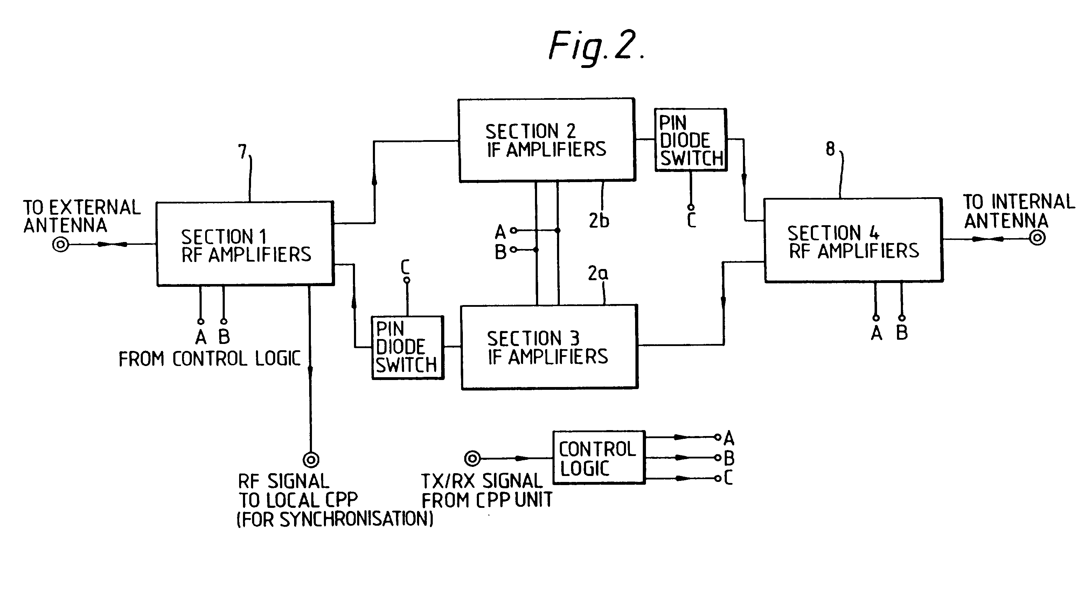

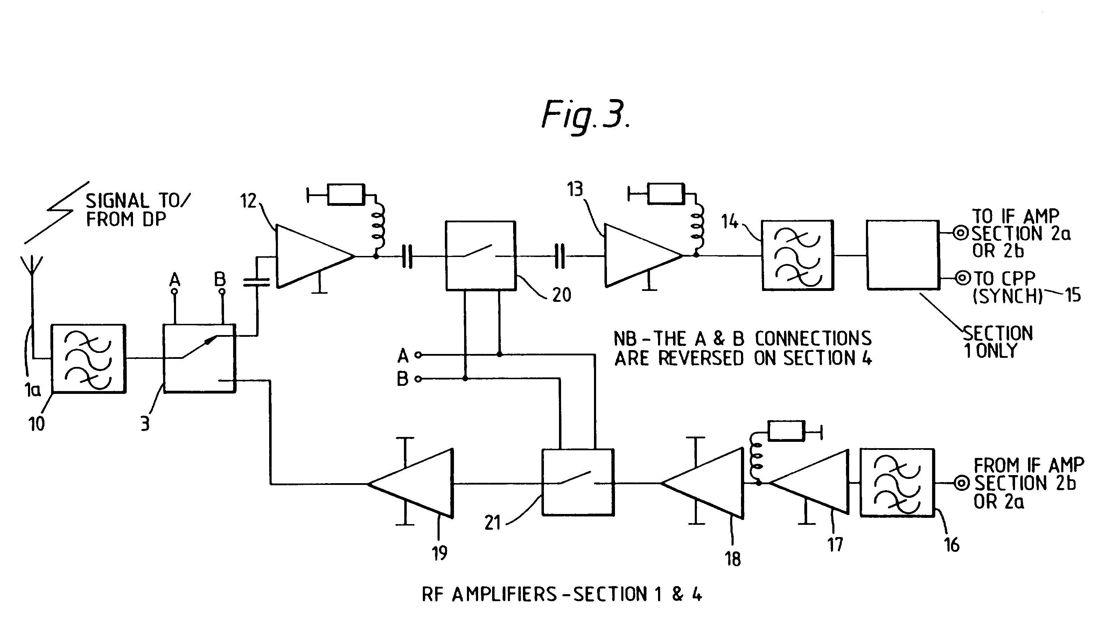

The duplex repeater shown in fig. 1 consists basically of separate up and down very high gain RF amplifier paths 2a, 2b which are connected to antennas 1a, 1b via changeover switches 3. Receiver 4 is also connected to antenna la and is connected to the control inputs of changeover switches 3. Detailed construction of the repeater is shown in figures 2 to 4. The amplification paths 2a, 2b shown in Figure 2 consist of separate Intermediate Frequency sections. There are also common Radio Frequency pre-and post amplification sections (7, 8) (not shown in Figure 1). RF section 7 is shown in Figure 3. It is connected to antenna 1a. The input/output of the antenna is connected to a band-pass filter 10, connected to the changeover switch 3. With the switch 3 in the position shown the filter 10 is connected to two broadband amplifiers 12, 13 and a second band pass filter 14, the output of which is connected to the Intermediate Frequency amplifier (2a) and to control logic 15. With the switch 3 reversed the filter 10 is connected with the output of the upstream amplifier path 2b through a band pass filter 16, and three amplifiers 17, 18, 19.

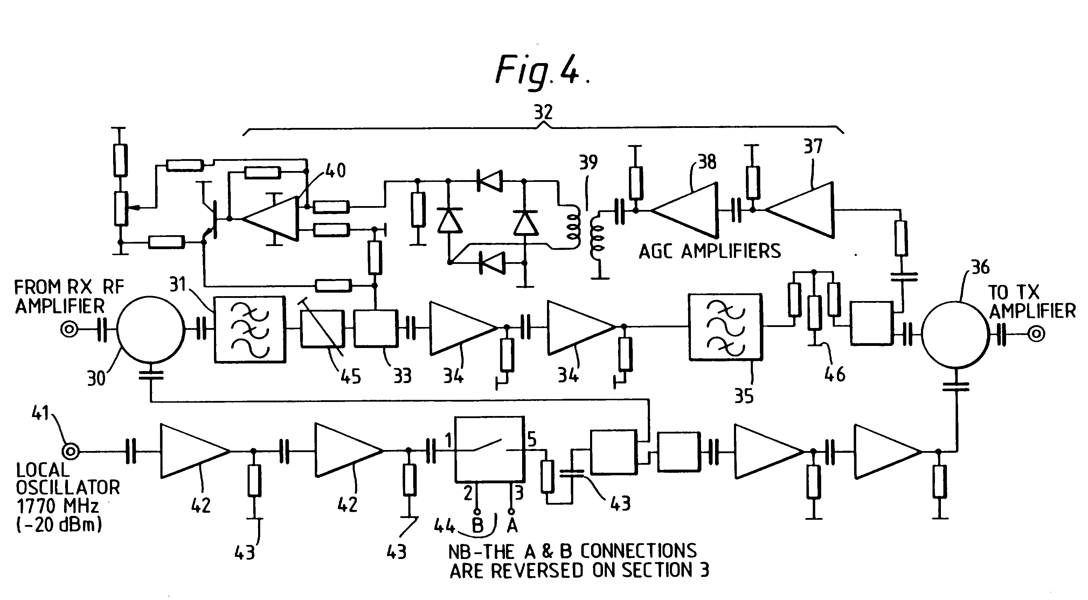

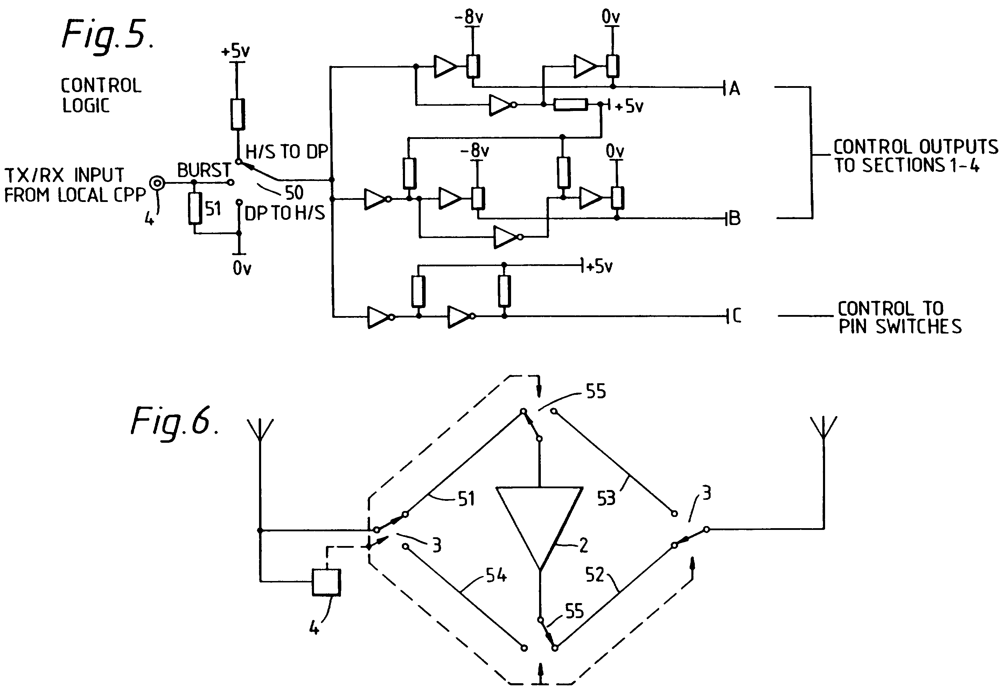

Additional high insulation switches 20, 21 are provided. The switches 3, 20, 21 are controlled by the control logic 15 (fig 5) discussed below, by control inputs (A,B). Downstreamside amplification section 8 is similar to upstream-side amplification section 7 except that there is no output to the control logic 15 and the control inputs A and B are reversed. The IF Amplifiers 2a, 2b are identical and contain ail the frequency conversion, main amplification, and automatic gain control (AGC) circuitry shown in fig. 4. Each section has an RF input from its respective RF pre-amplifier 7, 8, connected to an active mixer 30 acting as a downconverter. This is connected to a lowpass filter 31, and then to an electronic attenuator 33 connected to an Automatic Gain Control circuit 32. The output of the attenuator 33 is fed to amplifiers 34, and then to a second mixer 36 to provide upconversion. The AGC circuit 32 is connected to the output of a filter 35 and comprises two amplifiers 37, 38, a transformer 39 and an amplifier 40 providing a control voltage to the attenuator 33.

The signai from a local oscillator 41, is fed to the mixers 30, 36 by way of amplifiers 42 and attenuators 43. An isolation switch 44 is connected to the control logic outputs.

The two IF amplification paths 2a, 2b are identical, except that the control connections (A,B) to the isolation switch 44 are reversed in the path 2b.

The control logic circuit in fig 5 consists of an input from the receiver 4 applied to an analogue switch 50, which routes the control inputs to connections A, B, according to the applied voltages.

Figure 6 shows an arrangement similar to that of fig 1, where there is only one IF amplification path 2. It forms part of the downstream path 51, 52 or an upstream path 53, 54, through the switches 3 controlled by the control logic. The individual elements (RF sections, IF section and control logic) are similar to those of the first embodiment.

Such an arrangement may be used for example to improve radio coverage within a building. The first (up) antenna would be on the exterior wall of a building and in line of sight with the base station. The second (down) antenna would be on the interior wall of the building in order to improve the operation of mobile units within the building.

The changeover switches 3 are required in order to isolate the amplifier path not in use, to prevent it forming a feedback loop. In normal operation, a link is established via the repeater, between the Distribution Point (DP) and the Cordless Portable Part (CPP or handset). The receiver 4, associated with the repeater, decodes the incoming signals in order to extract a transmit/receive (Tx/Rx) signal to synchronise the repeater switching.

This receiver 4 detects the signals being received by the first antenna 1a, de-modulates the signals, and extracts the synchronisation data carried in the radio signals. This synchronisation data is used to control the switches 3 so that the switching in and out of the two amplification paths is synchronised with the receipt of upstream and downstream signals by the system. It will be noted, however, that the signals transmitted by the two antennas 1a, 1b have not themselves been de-modulated and re-modulated.

Since the receiver 4 demodulates the signals, it may also be used to provide a local connection 49 into the system. This allows the repeater station to perform a second role, as a fixed take off from a radio 'bus-line'.

In the interests of amplifier stability, the design of the repeater is split into four main sections as shown in figure 2. Each section is housed in a separate screened compartment.

The incoming radio signal is converted to a suitable frequency for the amplification and Automatic Gain Control, after which it is re-converted to the original frequency. Pre- and post-amplification takes place in RF amplifiers 7, 8.

These sections provide receiver preamplification and transmitter power amplification of signals received from, and transmitted to, the DP and the handset. A circuit diagram of these sections is shown in fig. 3. A transmit/receive changeover switch is included which enables the antenna and front end filter to be used for both transmission and reception. The RF amplifiers 7 & 8 are identical apart from an additional output on the upstream amplifier 7 which provides an output for the synchronising transceiver.

In receive mode, the signal from the antenna 1a or 1b is immediately filtered by 3-pole ceramic filter 10, which is also used for transmitter filtering. After passing through the changeover switch 3, the signal is then amplified by the broadband amplifiers 12, 13 before being filtered by a second DECT ceramic filter 14. A preamplified signal output is thus provided for subsequent amplification in IF Amplifiers 2a, 2b. The RF Amplifier 7 includes an additional output for the control logic 15 controlling the DECT synchronising transceiver 4.

In transmit mode, the incoming signal is filtered by a DECT ceramic filter 16 and then amplified by three devices 17, 18, 19, the last of which has a specified ldB output compression point of typically +28dBm. The signal is then applied to the antenna via the changeover switch 3 and common front end DECT filter 10.

Although the transmit/receive changeover switch 3 offers some isolation between the transmit and receive paths, additional high isolation (65dB) switches 20, 21 are necessary to ensure that the repeater remains stable (i. e. the total loop gain of the complete repeater, including the changeover switches 3, is less than 1). These switches 20, 21 are also controlled by the receiver 4.

The preamplified DECT signal from the amplifier section 7 (or 8) is initially converted down to 120MHz by an active mixer 30. After some filtering by the 200MHz (-3dB) low pass filter 31, the electronic attenuator 33 acts as the automatic gain controlling element.

The main repeater IF gain is provided by two broadband amplifiers 34, each having a specified gain of 33dB at 100MHz, and combination of fixed and variable attenuators 45. 46 enables the maximum gain of the repeater to be adjusted.

The signal is then split into two paths, one to the second active mixer 36 and one to the AGC circuit 32 which comprises two broadband RF amplifiers 37, 38 , a step-up transformer 39 to provide adequate voltage for the AGC detector and an operational amplifier 40 to amplify and level shift the control voltage for the PAS-1 attenuator 33. Finally, the second mixer 36 up-converts the 120MHz signal back to 1.89GHz for subsequent amplification in RF amplifier 7 or 8.

The local oscillator required by these sections is provided by an external signal generator 41, which is set to 120MHz below the channel frequency. In view of the high gain of the IF amplifiers, considerable care has to be taken to ensure adequate isolation of the local oscillators applied to the mixers. This is achieved with a series of amplifiers 42 and attenuators 43. An isolation switch 44 is included to provide extra attenuation in the "inactive" path to aid repeater stability.

The purpose of the control logic shown in fig 5 is to convert the Tx/Rx control signal, supplied by the local DECT CPP 4, into voltage levels required by the GaAs switches 11 and PIN diode switch modules. The TTL Tx/Rx signal is applied to DG211 analogue switches 50, which route the Ov and -8v control inputs to the GaAs devices.

In a second embodiment, shown in figure 6, the up and down amplification paths both use the same amplification circuitry. The switching means 3 is arranged to change the connections between this circuitry and the antennas, so that in a first (downward) configuration the 'up' antenna is connected to the input of the amplifier through a connection 51 and the 'down' antenna is connected to the output through a connection 52 to form a first amplification path. In response to the synchronisation data identified by the second receiver 4, these connections can be reversed to a second (upward) configuration to form a second amplification path from the down antenna, through connection 53, the amplification circuitry and a connection 54 to the up antenna. Additional switching 55 is used to ensure isolation of the unused parts of the circuitry.

The AGC will respond to the strongest signal detected by the AGC circuitry. For a repeater arranged to amplify frequency-division as well as time-division multiplexed signals, the system must be frequency-agile, so that only the selected channel is amplified. This may be achieved by varying the centre frequency of the filter 35, but is more easily controlled by varying the local oscillator frequency supplied to the mixers 30 and 36 so that whatever RF signal is to be amplified in a given time slot will always be converted to the same intermediate frequency. Control signals for the local oscillator are derived from the control signal derived from receiver 4.

An alternative arrangement would be to increase the bandwidth of the filter 35 to cover the whole DECT band, say 20MHz. The local oscillator could then be a single fixed frequency. However, if several RF channels are active simultaneously, the gain will be controlled by the strongest signal.

## Claims

1. A radio repeater for reception, amplification and retransmission of radio signals carrying synchronisation data, the repeater having a plurality of amplification paths (2a, 2b) and having means (3) for repeated changeover switching between amplification paths, characterised in having means (4) for monitoring incoming radio signals, means for extracting synchronisation data from the monitored signals, and means (20, 21) for selecting an amplification path (2a, 2b) on the basis of the synchronisation data so extracted, so that the incoming radio signals can be amplified by the selected amplification path.

2. A radio repeater for selectively amplifying different time-slots in a radio signal carrying synchronisation data wherein the repeater comprises: a radio receiver (1a, 1b) for receiving incoming radio signals; (2a, 2b) a plurality of amplifying paths for amplifying the radio signals received by the radio receiver; a switching means (3) for selectively switching the incoming radio signals to individual amplifying paths from amongst the plurality of amplifying paths; means (4) for monitoring the incoming radio signals; data extraction means for extracting, from the output of the monitoring means synchronisation data carried by the radio signals; and control means for controlling the switching means (3) in response to the synchronisation data extracted by the data extraction means.

3. A radio repeater as claimed in claim 1 or 2 having additional switching (55) to isolate switched out circuitry not forming part of the selected amplifying path, and means for controlling said switching in accordance with the synchronisation data.

4. A radio repeater as claimed in any preceding claim, wherein at least one amplification path (2a, 2b) has an automatic gain control circuit (32).

5. A radio repeater as claimed in claim 4, where each amplification path (2a, 2b) has an automatic gain control circuit (32).

6. A radio repeater as claimed in claim 5, wherein each amplification path (2a, 2b) has a dedicated automatic gain control circuit (32).

7. A radio repeater as claimed in any preceding claim, wherein the paths include separate up and down amplification paths (2a, 2b).

8. A radio repeater as claimed in any preceding claim, having means (30) for converting the frequency of the incoming radio signals to a second frequency.

9. A radio repeater as claimed in claim 8, wherein the repeater is arranged to select an incoming carrier frequency and to convert any such incoming frequency to a second frequency.

10. A radio repeater as claimed in claim 9, when appended to claim 2, wherein the frequency conversion means has means (30) for mixing the incoming signal with a local oscillator frequency, and means (36) for extracting frequency data from the incoming signal to control the local oscillator such that the second frequency has a predetermined value, irrespective of the incoming signal frequency.

11. A radio repeater as claimed in any of claims 8 to 10, having means for downconverting the frequency of the incoming signal for amplification and means for reconverting the amplified signal to the original frequency for onward transmission.

12. A radio repeater as claimed in any preceding claim, wherein the amplification paths (51,2,52; 53,2,54) have parts in common, the switching means (3) being arranged to change the connections between the common parts to define the different paths.

13. A radio repeater as claimed in claim 12, wherein there are separate up and down amplification paths, and wherein the switching is arranged such that at least one of the common paths is connected such that the upstream and downstream paths pass through the common part (2) in the same direction.

14. A radio repeater as claimed in any preceding claim, wherein the monitoring means (4) includes a separate radio receiver.

15. A radio repeater as claimed in claim 14, wherein the separate radio receiver (4) is fed from the same antenna (1a) as the amplification paths.

16. A radio repeater as claimed in either claim 14 or claim 15, wherein the receiver (4) has provision for connecting a local communications connection (49).

17. A mobile cellular radio system including a radio repeater according to any preceding claim.

18. A telephone network comprising at least one radio distribution point for establishing a radio link with one or more cordless terminals, the network including a radio repeater according to any of claims 1 to 16.

19. A method of reception, amplification, and retransmission of a plurality of radio signals carrying synchronisation data, characterised in that incoming radio signals are monitored and synchronisation data extracted from the monitored signals, and for each signal an amplification path of a radio repeater, arranged for repeated changeover switching between amplification paths, is selected from a plurality of such paths (2a, 2b) on the basis of the synchronisation data so extracted, so that each incoming radio signal can be amplified by a respective amplification path.

## Patentansprüche

1. Funkzwischenverstärker zum Empfangen, Verstärken und Weiterübertragen von Funksignalen, die Synchronisierungsdaten enthalten, wobei der Zwischenverstärker mehrere Verstärkungskanäle (2a, 2b) und eine Einrichtung (3) zum wiederholten Umschalten zwischen den Verstärkungskanälen besitzt und dadurch gekennzeichnet ist, daß er eine Einrichtung (4) zum Überwachen ankommender Funksignale, eine Einrichtung zum Extrahieren von Synchronisierungsdaten aus den überwachten Signalen sowie eine Einrichtung (20, 21) zum Auswählen eines Verstärkungskanals (2a, 2b) auf der Grundlage der derart extrahierten Synchronisierungsdaten besitzt, so daß die ankommenden Funksignale vom ausgewählten Verstärkungskanal verstärkt werden können.

2. Funkzwischenverstärker zum wahlweisen Verstärken unterschiedlicher Zeitschlitze in einem Funksignal, das Synchronisierungsdaten enthält, wobei der Zwischenverstärker enthält: einen Funkempfänger (1a, 1b) zum Empfangen ankommender Funksignale; (2a, 2b) mehrere Verstärkungskanäle zum Verstärken der vom Funkempfänger empfangenen Funksignale; eine Schalteinrichtung (3) zum wahlweisen Aufschalten der ankommenden Funksignale auf einzelne Verstärkungskanäle der mehreren Verstärkungskanäle; eine Einrichtung (4) zum Überwachen der ankommenden Funksignale; eine Datenextraktionseinrichtung zum Extrahieren von Synchronisierungsdaten, die in den Funksignalen enthalten sind, aus dem Ausgang der Überwachungseinrichtung; sowie eine Steuereinrichtung zum Steuern der Schalteinrichtung (3) in Abhängigkeit von den von der Datenextraktionseinrichtung extrahierten Synchronisierungsdaten.

3. Funkzwischenverstärker nach Anspruch 1 oder 2, mit einer zusätzlichen Schaltvorrichtung (55) zum Isolieren der abgeschalteten Schaltung, die nicht Teil des ausgewählten Verstärkungskanals ist, sowie einer Einrichtung zum Steuern der Schalteinrichtung in Abhängigkeit von den Synchronisierungsdaten.

4. Funkzwischenverstärker nach irgendeinem vorangehenden Anspruch, in dem wenigstens ein Verstärkungskanal (2a, 2b) eine automatische Verstärkungsfaktorregelschaltung (32) besitzt.

5. Funkzwischenverstärker nach Anspruch 4, in dem jeder Verstärkungskanal (2a, 2b) eine automatische Verstärkungsfaktorregelschaltung (32) besitzt.

6. Funkzwischenverstärker nach Anspruch 5, in dem jeder Verstärkungskanal (2a, 2b) eine zugeordnete automatische Verstärkungsfaktorregelschaltung (32) besitzt.

7. Funkzwischenverstärker nach irgendeinem vorangehenden Anspruch, in dem die Kanäle getrennte Aufwärts- und Abwärts-Verstärkungskanäle (2a, 2b) enthalten.

8. Funkzwischenverstärker nach irgendeinem vorangehenden Anspruch, der eine Einrichtung (30) zum Umsetzen der Frequenz der ankommenden Funksignale in eine zweite Frequenz besitzt.

9. Funkzwischenverstärker nach Anspruch 8, in dem der Zwischenverstärker dazu dient, eine ankommende Trägerfrequenz auszuwählen und eine solche beliebige ankommende Frequenz in eine zweite Frequenz umzusetzen.

10. Funkzwischenverstärker nach Anspruch 9 in Verbindung mit Anspruch 2, in dem die Frequenzumsetzungseinrichtung eine Einrichtung (30) zum Mischen des ankommenden Signals mit einer lokalen Oszillatorfrequenz sowie eine Einrichtung (36) zum Extrahieren der Frequenzdaten aus dem ankommenden Signal besitzt, um den lokalen Oszillator so zu steuern, daß die zweite Frequenz unabhängig von der ankommenden Signalfrequenz einen vorgegebenen Wert besitzt.

11. Funkzwischenverstärker nach irgendeinem der Ansprüche 8 bis 10, der eine Einrichtung zum Herabsetzen der Frequenz des ankommenden Signals für die Verstärkung sowie eine Einrichtung zum Umsetzen des verstärkten Signals in die ursprüngliche Frequenz für die folgende Weiterübertragung besitzt.

12. Funkzwischenverstärker nach irgendeinem vorangehenden Anspruch, in dem die Verstärkungskanäle (51, 2, 52; 53, 2, 54) gemeinsame Bauelemente besitzen, wobei die Schalteinrichtung (3) dazu dient, die Verbindungen zwischen den gemeinsamen Bauelementen zu verändern, um die verschiedenen Kanäle zu definieren.

13. Funkzwischenverstärker nach Anspruch 12, in dem getrennte Aufwärts- und Abwärts-Verstärkungskanäle vorhanden sind, wobei die Umschalteinrichtung so angeordnet ist, daß wenigstens einer der gemeinsamen Kanäle so verbunden wird, daß die Aufwärts- und Abwärts-Kanäle in derselben Richtung über den gemeinsamen Teil (2) laufen.

14. Funkzwischenverstärker nach irgendeinem der vorangehenden Ansprüche, in dem die Überwachungseinrichtung (4) einen separaten Funkempfänger enthält.

15. Funkzwischenverstärker nach Anspruch 14, in dem der separate Funkempfänger (4) von derselben Antenne (la) gespeist wird und die Verstärkungskanäle bildet.

16. Funkzwischenverstärker nach Anspruch 14 oder 15, in dem der Empfänger (4) für den Anschluß einer lokalen Kommunikationsverbindung (49) vorbereitet ist.

17. Zellenmobilfunksystem, das einen Funkzwischenverstärker nach irgendeinem vorangehenden Anspruch enthält.

18. Telephonnetz, das wenigstens einen Funkverteilungspunkt enthält, um eine Funkverbindung mit einem oder mehreren schnurlosen Endgeräten einzurichten, wobei das Netz einen Funkzwischenverstärker nach irgendeinem der Ansprüche 1 bis 16 enthält.

19. Verfahren zum Empfangen, Verstärken und Weiterübertragen mehrerer Funksignale, die Synchronisierungsdaten enthalten, dadurch gekennzeichnet, daß ankommende Radiosignale überwacht werden und aus den überwachten Signalen Synchronisierungsdaten extrahiert werden, wobei für jedes Signal auf der Grundlage der derart extrahierten Synchronisierungsdaten ein Verstärkungskanal eines Funkzwischenverstärkers, der zum wiederholten Umschalten zwischen den Verstärkungskanälen dient, aus mehreren solchen Kanälen (2a, 2b) ausgewählt wird, so daß jedes ankommende Funksignal von einem entsprechenden Verstärkungskanal verstärkt werden kann.

## Revendications

1. Répéteur radio pour réception, amplification et retransmission des signaux radio acheminant des données de synchronisation, le répéteur comportant une pluralité de trajets d'amplification (2a, 2b) et comportant un moyen (3) pour commutation répétée des trajets d'amplification, caractérisé en ce qu'il comporte un moyen (4) pour surveiller les signaux radio entrants, un moyen pour extraire les données de synchronisation des signaux surveillés et un moyen (20, 21) pour sélectionner un trajet d'amplification (2a, 2b) sur la base des données de synchronisation ainsi extraites, d'une manière telle que les signaux radio entrants peuvent être amplifiés par le trajet d'amplification sélectionné.

2. Répéteur radio pour amplifier sélectivement des tranches temporelles différentes dans un signal radio acheminant des données de synchronisation dans lequel le répéteur comprend : un récepteur radio (1a, 1b) pour recevoir les signaux radio entrants ; une pluralité de trajets d'amplification (2a, 2b) pour amplifier les signaux radio reçus par le récepteur radio ; un moyen de commutation (3) pour commuter sélectivement les signaux radio entrants vers des trajets d'amplification individuels parmi la pluralité des trajets d'amplification ; un moyen (4) pour surveiller les signaux radio entrants ; un moyen d'extraction de données pour extraire à partir de la sortie du moyen de surveillance les données de synchronisation acheminées par les signaux radio ; et un moyen de commande pour commander le moyen de commutation (3) en réponse aux données de synchronisation extraites par le moyen d'extraction de données.

3. Répéteur radio selon la revendication 1 ou 2, comportant un interrupteur supplémentaire (55) afin d'isoler les circuits ne constituant pas une partie du trajet d'amplification sélectionné et un moyen pour commander ledit interrupteur en conformité avec les données de synchronisation.

4. Répéteur radio selon l'une quelconque des revendications précédentes, dans lequel au moins un trajet d'amplification (2a, 2b) comporte un circuit de commande automatique de gain (32).

5. Répéteur radio selon la revendication 4, dans lequel chaque trajet d'amplification (2a, 2b) comporte un circuit de commande automatique de gain (32).

6. Répéteur radio selon la revendication 5, dans lequel chaque trajet d'amplification (2a, 2b) comporte un circuit de commande automatique de gain spécialisé (32).

7. Répéteur radio selon l'une quelconque des revendications précédentes, dans lequel les trajets comprennent des trajets d'amplification montant et descendant (2a, 2b).

8. Répéteur radio selon l'une quelconque des revendications précédentes, comportant un moyen (30) pour convertir la fréquence des signaux radio entrants en une seconde fréquence.

9. Répéteur radio selon la revendication 8, dans lequel le répéteur est prévu pour sélectionner une fréquence porteuse entrante et pour convertir chaque fréquence entrante en une seconde fréquence.

10. Répéteur radio selon la revendication 9, lorsque annexée à la revendication 2, dans lequel le moyen de conversion de fréquence comporte un moyen (30) pour mélanger le signal entrant avec une fréquence de l'oscillateur local et un moyen (36) pour extraire les données de fréquence du signal entrant afin de commander l'oscillateur local d'une manière telle que la seconde fréquence présente une valeur prédéterminée sans tenir compte de la fréquence du signal entrant.

11. Répéteur radio selon l'une quelconque des revendications 8 à 10, comportant un moyen pour abaisser la fréquence du signal entrant pour amplification et un moyen pour reconvertir le signal amplifié à la fréquence d'origine pour transmission vers l'extérieur.

12. Répéteur radio selon l'une quelconque des revendications précédentes, dans lequel les trajets d'amplification (51, 2, 52 ; 53, 2, 54) ont des parties en commun, le moyen de commutation (3) étant prévu pour changer les connexions entre les parties communes afin de définir les trajets différents.

13. Répéteur radio selon la revendication 12, dans lequel sont prévus des trajets d'amplification montant et descendant séparés et dans lequel le commutateur est prévu d'une manière telle qu'au moins un des trajets communs est connecté de sorte que les trajets montant et descendant passent à travers la partie commune (2) dans la même direction.

14. Répéteur radio selon l'une quelconque des revendications précédentes, dans lequel le moyen de surveillance (4) comprend un récepteur radio séparé.

15. Répéteur radio selon la revendication 14, dans lequel le récepteur radio séparé (4) est alimenté à partir de la même antenne (1a) que les trajets d'amplification.

16. Répéteur radio selon soit la revendication 14, soit la revendication 15, dans lequel le récepteur (4) a un moyen pour connexion à une connexion de communication locale (49).

17. Système de radio cellulaire mobile comprenant un répéteur radio selon l'une quelconque des revendications précédentes.

18. Réseau téléphonique comprenant au moins un point de distribution radio pour établir une liaison radio avec un ou plusieurs terminaux sans fil, le réseau comprenant un répéteur radio selon l'une quelconque des revendications 1 à 16.

19. Procédé de réception, d'amplification et de retransmission d'une pluralité de signaux radio acheminant des données de synchronisation, caractérisé en ce que les signaux radio entrants sont surveillés et les données de synchronisation extraites des signaux surveillés et, pour chaque signal, un trajet d'amplification du répéteur radio, prévu pour commutation répétée entre des trajets d'amplification, est sélectionné à partir d'une pluralité de ces trajets (2a, 2b) sur la base des données de synchronisation ainsi extraites, d'une manière telle que chaque signal radio entrant peut être amplifié par un trajet d'amplification respectif.
